# EUROPEAN PATENT APPLICATION

(11) **EP 4 675 568 A1**
(43) Date of publication of application: **07.01.2026**
(21) Application number: 24763545.1
(22) Date of filing: 07.02.2024
(51) Int. Cl.: G06T 19/00

(54) **IMAGE PROCESSING DEVICE, METHOD, AND PROGRAM**

(30) Priority: 01.03.2023 JP 2023031013
(71) Applicant: FUJIFILM Corporation, Tokyo 106-8620 (JP)
(72) Inventor: YAMAJI Kei, Saitama-shi, Saitama 331-9624 (JP)
(74) Representative: Meissner Bolte Partnerschaft mbB
(86) International application number: PCT/JP2024/004060
(87) International publication number: WO 2024/181061

(57) **Abstract**

An image processing apparatus, a method, and a program capable of generating a three-dimensional space image corresponding to a memory experienced by an individual are provided. A server (10) functioning as an image processing apparatus includes a processor (12), and a memory (14) storing a program to be executed by the processor (12), in which the processor (12) is configured to acquire an image of a user from a user terminal (30), acquire a three-dimensional space image of a three-dimensional space related to the image of the user from a three-dimensional space image database (20), acquire a corresponding position, in the three-dimensional space image, of a subject included in the image of the user, and change an image at the position in the three-dimensional space image based on the image of the user.

## Description

### BACKGROUND OF THE INVENTION

### 1. Field of the Invention

The present invention relates to an image processing apparatus, a method, and a program, and particularly to a technique for generating a three-dimensional space image.

### 2. Description of the Related Art

In the related art, a system that enables experience of virtual reality (VR) has been suggested (JP2003-208633A).

The system according to JP2003-208633A receives input of information about a viewpoint position and a viewpoint moving speed during movement of a viewpoint of a client, manages the movement of the viewpoint of the client based on the input information, predicts a walking direction in a case where the client walks in a virtual space of a city or the like (in the case of performing walk-through) based on the movement of the viewpoint of the client, renders a landscape during the walk-through before receiving information related to the subsequent viewpoint from the client, and outputs the landscape in association with the viewpoint position and the walking direction. Accordingly, the client can move the viewpoint at a high speed in the virtual space in which the landscape of the city or the like is displayed.

According to JP2021-47610A, a situation perception support system enables a person at a place other than a construction site to perceive, without going to the construction site, a situation of the construction site with accuracy comparable to that in a case where the person is at the construction site.

The situation perception support system according to JP2021-47610A stores three-dimensional shape data indicating a three-dimensional shape of a construction object in a space of the construction site and, in a case where a part of a construction object measured in the past by a three-dimensional shape measurement device is measured again, updates the stored three-dimensional shape data using data indicating a three-dimensional shape of a newly measured part only in a case where an amount of information of the three-dimensional shape of the newly measured part is larger than that of a three-dimensional shape of the part measured in the past. Accordingly, in updating the three-dimensional shape data, data having a larger amount of information of the three-dimensional shape is left as data indicating a three-dimensional shape related to the same part of the construction object, and a degree of detail of the three-dimensional shape is not decreased.

### SUMMARY OF THE INVENTION

One embodiment according to the disclosed technology provides an image processing apparatus, a method, and a program capable of generating a three-dimensional space image corresponding to a memory experienced by an individual.

According to a first aspect of the invention, there is provided an image processing apparatus comprising a processor, and a memory storing a program to be executed by the processor, in which the processor is configured to acquire a first image, acquire a three-dimensional space image of a three-dimensional space related to the first image, acquire a corresponding position, in the three-dimensional space image, of a first subject included in the first image, and change an image at the position in the three-dimensional space image based on the first image.

According to a second aspect of the present invention, in the image processing apparatus according to the first aspect, it is preferable that an image of the first subject is extracted from the first image, and the image at the position in the three-dimensional space image is changed based on the image of the first subject.

According to a third aspect of the present invention, in the image processing apparatus according to the first aspect or the second aspect, it is preferable that the first subject includes at least one of an object or a background included in the first image.

According to a fourth aspect of the present invention, in the image processing apparatus according to any one of the first aspect to the third aspect, it is preferable that the first image is an image group including a plurality of static images or a motion picture.

According to a fifth aspect of the present invention, in the image processing apparatus according to the fourth aspect, it is preferable that the processor is configured to obtain a first importance degree for each scene.

According to a sixth aspect of the present invention, in the image processing apparatus according to the fifth aspect, it is preferable that the processor is configured to specify a scene for which the first importance degree is greater than or equal to a threshold value.

According to a seventh aspect of the present invention, in the image processing apparatus according to the sixth aspect, it is preferable that an image belonging to the specified scene is extracted from the image group, and an image of the first subject is extracted from the image belonging to the specified scene.

According to an eighth aspect of the present invention, in the image processing apparatus according to any one of the fifth aspect to the seventh aspect, it is preferable that the first importance degree is determined based on at least one of an imaging frequency per unit time for each scene, the number of captured similar images for each scene, in a case where the first subject is a person, a facial expression, a motion, or voice of the person for each scene, an image capturing person of an image for each scene, or biological information of the person.

According to a ninth aspect of the present invention, in the image processing apparatus according to the second aspect, it is preferable that the processor is configured to extract the image of the first subject from a difference between the three-dimensional space image and the first image.

According to a tenth aspect of the present invention, in the image processing apparatus according to any one of the first aspect to the ninth aspect, it is preferable that the processor is configured to perform correction of matching at least one of brightness or color of the three-dimensional space image to at least one of brightness or color of the first image.

According to an eleventh aspect of the present invention, in the image processing apparatus according to any one of the fourth aspect to the eighth aspect, it is preferable that the processor is configured to extract the first subject included in one image of the image group and a second subject included in another image different from the one image, determine a position of an image of the second subject in the three-dimensional space image in association with a position of an image of the first subject, and change an image at the determined position in the three-dimensional space image based on the image of the second subject.

According to a twelfth aspect of the present invention, in the image processing apparatus according to the second aspect or the ninth aspect, it is preferable that the processor is configured to determine a second importance degree of the first subject, and change a degree of reflection of the image of the first subject on the three-dimensional space image in accordance with the second importance degree.

According to a thirteenth aspect of the present invention, in the image processing apparatus according to the second aspect, the ninth aspect, or the twelfth aspect, it is preferable that the processor is configured to determine a second importance degree of the first subject, and extract an image of the first subject having the second importance degree greater than or equal to a threshold value.

According to a fourteenth aspect of the present invention, in the image processing apparatus according to the second aspect, the ninth aspect, the twelfth aspect, or the thirteenth aspect, it is preferable that the processor is configured to receive input of a disclosure level of the three-dimensional space image, and use the image of the first subject in which a degree of realness of the first subject is changed in accordance with the disclosure level.

According to a fifteenth aspect of the present invention, in the image processing apparatus according to any one of the first aspect to the fourteenth aspect, it is preferable that a plurality of types of the three-dimensional space images are present, and the processor is configured to determine a second importance degree of the first subject, and acquire the three-dimensional space image to be used for the changing from the plurality of types of three-dimensional space images in accordance with the second importance degree.

According to a sixteenth aspect of the present invention, in the image processing apparatus according to any one of the first aspect to the fifteenth aspect, it is preferable that a plurality of types of the three-dimensional space images are present, and the processor is configured to receive input of a disclosure level of the three-dimensional space image, and acquire the three-dimensional space image to be used for the changing from the plurality of types of three-dimensional space images in accordance with the disclosure level.

According to a seventeenth aspect of the present invention, in the image processing apparatus according to any one of the second aspect, the ninth aspect, and the twelfth aspect to the fifteenth aspect, it is preferable that the processor is configured to acquire an image of a third subject, determine a position of the image of the third subject in the three-dimensional space image in association with a position of the image of the first subject, and change an image at the determined position in the three-dimensional space image based on the image of the third subject.

According to an eighteenth aspect of the invention, there is provided an image processing method comprising, via a processor, a step of acquiring a first image, a step of acquiring a three-dimensional space image of a three-dimensional space related to the first image, a step of acquiring a corresponding position, in the three-dimensional space image, of a first subject included in the first image, and a step of changing an image at the position in the three-dimensional space image based on the first image.

According to a nineteenth aspect of the invention, there is provided an image processing program causing a computer to implement a function of acquiring a first image, a function of acquiring a three-dimensional space image of a three-dimensional space related to the first image, a function of acquiring a corresponding position, in the three-dimensional space image, of a first subject included in the first image, and a function of changing an image at the position in the three-dimensional space image based on the first image.

### BRIEF DESCRIPTION OF THE DRAWINGS

Fig. 1 is a diagram illustrating an overview of processing of an image processing apparatus according to an embodiment of the present invention.
Fig. 2 is a configuration diagram illustrating an image processing system including the image processing apparatus according to the embodiment of the present invention.
Fig. 3 is a functional block diagram illustrating a first embodiment of the image processing apparatus according to the embodiment of the present invention.
Fig. 4 is a diagram illustrating an example of an image of an important scene and an importance degree of a subject of the image.
Fig. 5 is a functional block diagram illustrating a second embodiment of the image processing apparatus according to the embodiment of the present invention.
Fig. 6 is a functional block diagram illustrating a third embodiment of the image processing apparatus according to the embodiment of the present invention.
Fig. 7 is a diagram illustrating a second embodiment of a subject extraction unit illustrated in Fig. 3.
Fig. 8 is a diagram illustrating one image including an image of a "mother" and a "child" and another image including an image of a "father".
Fig. 9 is a diagram illustrating a third embodiment of the subject extraction unit illustrated in Fig. 3.
Figs. 10A and 10B are diagrams illustrating examples of an image of a person to be reflected on a three-dimensional space image in accordance with the importance degree of the subject.
Fig. 11 is a diagram illustrating a fourth embodiment of the subject extraction unit illustrated in Fig. 3.
Fig. 12 is a functional block diagram illustrating a fourth embodiment of the image processing apparatus according to the embodiment of the present invention.
Figs. 13A and 13B are diagrams illustrating examples of the three-dimensional space image.
Fig. 14 is a functional block diagram illustrating a fifth embodiment of the image processing apparatus according to the embodiment of the present invention.
Fig. 15 is a diagram illustrating an embodiment of a subject extraction unit illustrated in Fig. 14.
Fig. 16 is a flowchart illustrating an embodiment of an image processing method according to the embodiment of the present invention.

### DESCRIPTION OF THE PREFERRED EMBODIMENTS

Hereinafter, preferred embodiments of an image processing apparatus, a method, and a program according to an embodiment of the present invention will be described in accordance with the accompanying drawings.

### [Overview of Image Processing Apparatus]

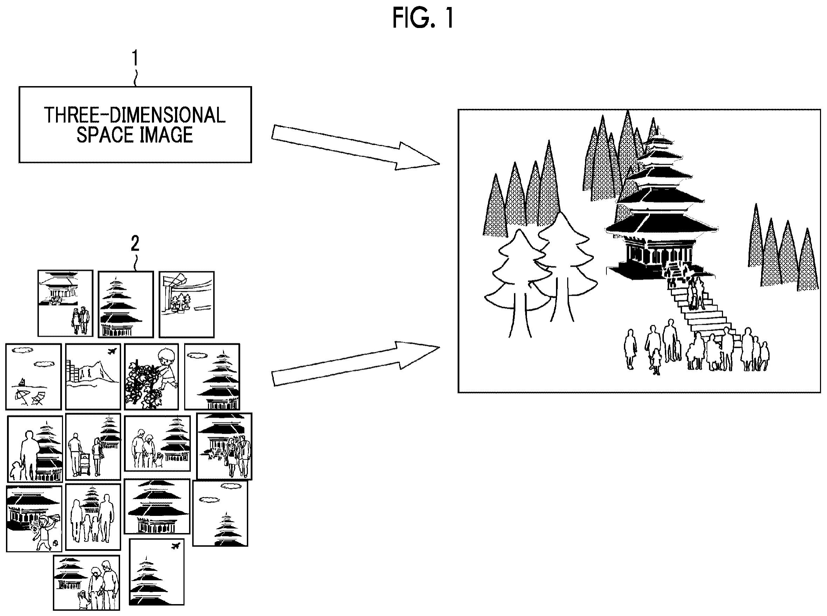

Fig. 1 is a diagram illustrating an overview of processing of the image processing apparatus according to the embodiment of the present invention.

In Fig. 1, 1 denotes a three-dimensional space image, and 2 denotes an image group of a user. For example, the image group 2 of the user includes a plurality of static images or a motion picture captured by an individual (the user) during traveling. The three-dimensional space image 1 is a three-dimensional space image in which a tourist spot and a street scene of a traveling destination of the user at which the image group 2 of the user is captured are reproduced.

In a case where the image processing apparatus acquires the image group 2 of the user, the image processing apparatus acquires the three-dimensional space image 1 indicating a three-dimensional space related to the image group 2 of the user.

The image processing apparatus acquires a corresponding position, in the three-dimensional space image 1, of a subject (a first subject) included in the image group 2 of the user and changes an image at the position of the first subject in the three-dimensional space image based on the image group 2 of the user.

Accordingly, the image processing apparatus can generate a user-specific three-dimensional space image corresponding to a memory experienced by the user. The user can re-experience the memory experienced by the user by viewing a two-dimensional static image or motion picture cut out from the user-specific three-dimensional space image in accordance with a viewpoint position and/or direction, using a dedicated viewer or the like.

### [Image Processing System]

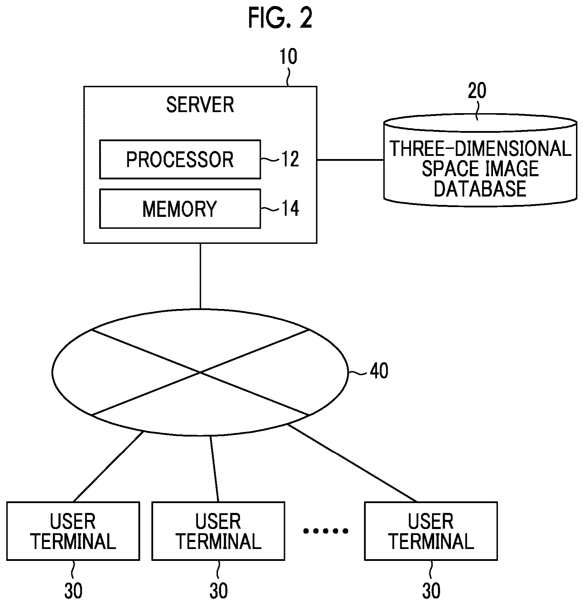

Fig. 2 is a configuration diagram illustrating an image processing system including the image processing apparatus according to the embodiment of the present invention.

The image processing system illustrated in Fig. 2 includes a server 10 functioning as the image processing apparatus, a three-dimensional space image database 20, and a user terminal 30 communicating with the server 10 through a network 40.

The server 10 is composed of a computer, a workstation, or the like and includes a processor 12, a memory 14, an input/output interface, and the like.

The processor 12 is composed of a central processing unit (CPU) and the like, and controls each unit of the server 10 in an integrated manner and generates the user-specific three-dimensional space image, as described in the overview of the image processing apparatus using Fig. 1. Details of image processing performed by the processor 12 will be described later.

The memory 14 includes a flash memory, a read-only memory (ROM), a random access memory (RAM), a hard disk apparatus, and the like. The flash memory, the ROM, or the hard disk apparatus is a non-volatile memory storing various programs and the like including an operating system and the image processing program for executing the image processing method according to the embodiment of the present invention.

The RAM functions as a work region of processing performed by the processor 12. Various programs stored in the flash memory or the like, data used for operation processing, and the like are temporarily stored. The processor 12 may incorporate a part (the RAM) of the memory 14.

The server 10 is connected to the network 40 such as the Internet and exchanges data with the user terminal 30 through the network 40. The server 10 communicates with the three-dimensional space image database 20 and acquires a desired three-dimensional space image from the three-dimensional space image database 20 or records the generated three-dimensional space image in the three-dimensional space image database 20.

For example, the three-dimensional space image database 20 is a part that stores and manages the three-dimensional space image in which the tourist spot and the street scene of the traveling destination of the user are reproduced, and regularly updates the stored three-dimensional space image to the latest three-dimensional space image or newly stores a three-dimensional space image created for a tourist spot, a city, or the like not stored.

The three-dimensional space image refers to a set of images that the user can obtain using the three-dimensional space. However, in a case where the three-dimensional space is relatively wide (for example, in a case where the three-dimensional space corresponds to the whole country of Japan), the concept of acquiring the three-dimensional space image is assumed to include a case where only images around a position on the three-dimensional space used by the user are acquired.

The server 10 is not limited to the case of acquiring the three-dimensional space image from the three-dimensional space image database 20 and can appropriately select and acquire the desired three-dimensional space image from public three-dimensional space images or paid three-dimensional space images from another server connected to the network 40. For example, the server 10 can acquire the three-dimensional space image from an existing service on the Internet (for example, Google (registered trademark) Street View).

The user terminal 30 includes a smartphone, a laptop computer, or a tablet terminal owned by the user or an imaging apparatus or the like connectable to the network 40. The user terminal 30 can transmit an image (a first image) of the user to the server 10 and receive the three-dimensional space image generated by the server 10.

The image of the user transmitted from the user terminal 30 to the server 10 may be one static image or an image group including a plurality of static images or a motion picture. The motion picture may be used as it is for changing the image, or an appropriate frame may be extracted from the motion picture as a static image and used. The image of the user is not limited to an image captured by the user, and refers to an image accessible by the user and includes an image stored in a device usable by the user and an image accessible by the user through a network such as cloud storage.

Three-dimensional viewer software is installed on the user terminal 30, and the three-dimensional space image received from the server 10 can be viewed by starting the three-dimensional viewer software.

The server 10 may have a function of providing a service for storing the image of the user transmitted from the user terminal 30 or a printing service for a photographic print.

### [Image Processing Apparatus]

### <First Embodiment of Image Processing Apparatus>

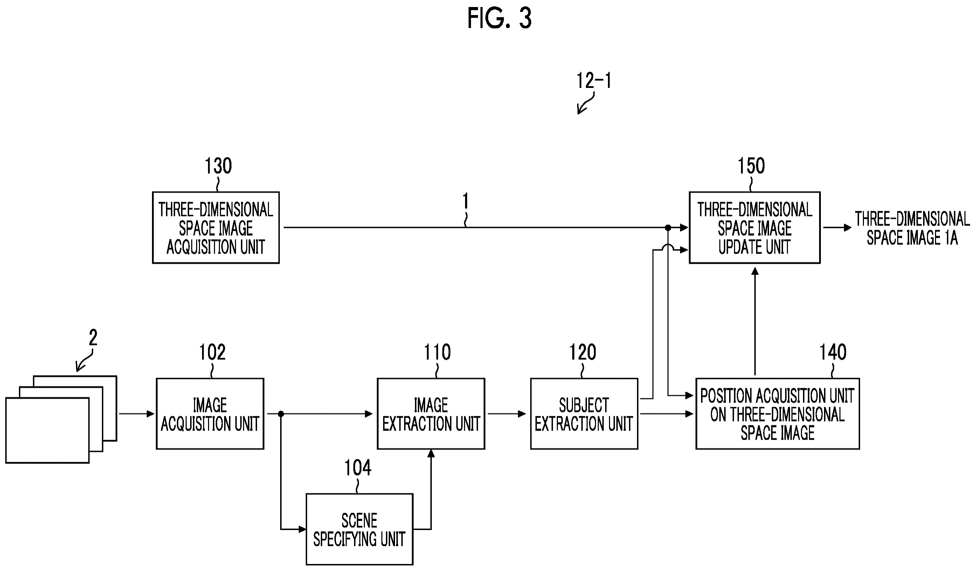

Fig. 3 is a functional block diagram illustrating a first embodiment of the image processing apparatus according to the embodiment of the present invention.

Fig. 3 is a functional block diagram mainly illustrating functions of the processor 12 of the server 10 functioning as the image processing apparatus illustrated in Fig. 2.

A processor 12-1 of the first embodiment of the processor 12 illustrated in Fig. 3 comprises an image acquisition unit 102, a scene specifying unit 104, an image extraction unit 110, a subject extraction unit 120, a three-dimensional space image acquisition unit 130, a position acquisition unit 140, and a three-dimensional space image update unit 150.

As described above, the image acquisition unit 102 acquires the image group 2 of the user from the user terminal 30. In the present example, the user is assumed to transmit the image group 2 captured during traveling at a tourist spot (for example, Kyoto) from the user terminal 30 to the server 10. The image group 2 of the user acquired by the image acquisition unit 102 is temporarily stored in the memory 14 of the server 10.

The scene specifying unit 104 specifies a scene from the image group 2 of the user, obtains an importance degree (a first importance degree) for each specified scene, and scores the importance degree of the scene. Here, the scene refers to a group of images that cohere with each other in time and content terms. A size of a time range or a content range to be grouped as one group may be appropriately determined depending on the nature of the image group. For example, for an image group captured during traveling in Kyoto, visits to each tourist spot, a moving time between the visits, or the like that can be perceived by global positioning system (GPS) information or the like recorded in an image file as accessory information can be grouped in time and content terms as each scene. For an image group captured in one year, events can be divided by an imaging date and time or the like, and each event can be grouped in time and content terms as a scene.

The importance degree of the scene can be determined based on at least one of an imaging frequency per unit time for each scene, the number of captured similar images for each scene, in a case where the subject included in the image group 2 is a person, a facial expression, a motion, or voice of the person for each scene, an image capturing person of the image for each scene, or biological information (a visual line, a pulse, or the like) of the person. The biological information such as the pulse can be used in a case where the biological information is recorded as tag information of the image of the user.

A scene in which the imaging frequency in the same time slot is high (a scene in which imaging is performed a large number of times in a short time) is an important scene, and a scene in which the number of captured similar images is large (a scene in which a large number of similar images are captured) is an important scene.

The scene specifying unit 104 preferably specifies a scene for which the importance degree is greater than or equal to a threshold value set in advance. This can exclude an image of a scene that is inappropriate for updating the three-dimensional space image 1.

The image extraction unit 110 extracts an image belonging to the specified scene (the important scene) in the image group 2 of the user. This reflects the image of the scene important to the user on the three-dimensional space image.

The image extracted by the image extraction unit 110 is output to the subject extraction unit 120.

The subject extraction unit 120 extracts an image of the subject (the first subject) from the input image. Here, the subject (the first subject) includes at least one of an object such as a person, a car, an animal, or a building, or a background included in the input image. The object refers to an object having a contour. The background refers to a region not belonging to the object in the image. A region of a sky such as a blue sky or a sunset sky, or the like is a typical example of the background. The image of the first subject may be a region occupied by the first subject in the input image, its surrounding region, or the image itself.

The subject extraction unit 120 preferably determines an importance degree (a second importance degree) of the subject in extracting the image of the subject from the input image and assigns a score of the importance degree of the subject to the image of the subject.

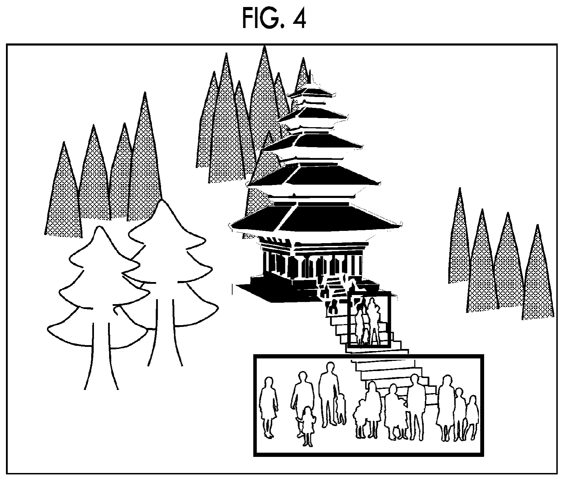

Fig. 4 is a diagram illustrating an example of an image of the important scene and the importance degree of the subject of the image.

Fig. 4 illustrates the image extracted from the image group of the user as the image of the important scene.

In the image illustrated in Fig. 4, a "five-story pagoda" is important, and "people" surrounded by a frame and other "objects" are not important. Here, the importance degree of the subject can be determined based on a reason that the scene specifying unit 104 specifies the important scene. For example, in the image group 2 of the user, in a case where a scene in which the number of captured similar images (images of the same five-story pagoda with different imaging positions, directions, and the like) is large is specified as the important scene, it can be determined that the "five-story pagoda" is an important subject to the user.

In the image illustrated in Fig. 4, an importance degree of the "five-story pagoda" is high. However, for example, in an image in which a person is imaged as a main subject, it can be determined that an importance degree of the "person" is high, and an importance degree of the background is low.

In a case where a stranger is included in an image in which people such as a family or friends are captured, an importance degree of the "family" or the "friends" is high, and an importance degree of the "stranger" is low. The "family", the "friends", and the "stranger" can be determined based on the imaging frequency and the number of captured images in the image group 2 of the user. The determination of the "family" and the "friends" can be estimated by analyzing a relationship between people captured in the image group 2 of the user in addition to their frequency of appearance in the image group 2 of the user. In a case where the image of the family is registered in advance in the server 10 or the like, the "family" can be determined by comparing with the registered image of the family.

In a case where an image obtained by imaging a certain event is determined as the important scene, it can be determined that a subject that is a main entity of the event is important. For example, a subject such as a "cat" in an image of a cat crossing, a "person" having an ice cream in an image, or a "mikoshi" in an image of a festival has a high importance degree.

The image of one or a plurality of subjects extracted by the subject extraction unit 120 is output to the position acquisition unit 140 on the three-dimensional space image and the three-dimensional space image update unit 150 together with a score indicating the importance degree of the subject. The subject extraction unit 120 preferably extracts the image of the subject for which the importance of the determined subject is greater than or equal to a threshold value set in advance. Accordingly, the image of the subject having a low importance degree less than the threshold value can be prevented from being used for updating the three-dimensional space image 1.

Meanwhile, the three-dimensional space image acquisition unit 130 acquires the three-dimensional space image 1 in which the tourist spot and the street scene of the traveling destination of the user at which the image group 2 of the user is captured are reproduced, from the three-dimensional space image database 20 illustrated in Fig. 2. Specifically, the three-dimensional space image 1 of the three-dimensional space related to the image extracted by the image extraction unit 110 is acquired using the GPS information recorded in a header or the like of the image file of one or a plurality of images extracted from the image group 2 of the user by the image extraction unit 110 or using positional information of a landmark such as a building captured in the image.

The three-dimensional space image 1 acquired by the three-dimensional space image acquisition unit 130 is output to the position acquisition unit 140 on the three-dimensional space image and the three-dimensional space image update unit 150.

The position acquisition unit 140 on the three-dimensional space image is a part that acquires the corresponding position, in the three-dimensional space image 1, of the subject included in the image extracted by the image extraction unit 110 (that is, the first subject corresponding to the image of the subject extracted by the subject extraction unit 120).

The position acquisition unit 140 preferably acquires a three-dimensional space position of the first subject in the three-dimensional space of the three-dimensional space image 1. For example, in a case where the three-dimensional space image 1 is composed of a three-dimensional model consisting of a polygon having vertices corresponding to feature points of an object including a building or a road, and a texture to be applied to surfaces of each polygon of the three-dimensional model (for example, an image obtained by imaging the object or the like), and coordinates of a three-dimensional space of the vertices of the polygon of the three-dimensional model are defined by latitude, longitude, and altitude, the position acquisition unit 140 acquires latitude, longitude, and altitude of feature points of the first subject as a position of the first subject corresponding to the three-dimensional space image 1.

In this case, the position acquisition unit 140 can search for a position at which the image of the first subject matches a part of a two-dimensional image cut out from the three-dimensional space image 1 (an image of a corresponding subject in the three-dimensional space image 1), and set coordinates, in the three-dimensional model, of the corresponding subject in the three-dimensional space image 1 in the case of matching, as a corresponding position of the first subject in the three-dimensional space image 1.

In a case where the first subject is a moving object such as a person, a three-dimensional model corresponding to the moving object is not present in the three-dimensional space image 1. In this case, the three-dimensional model corresponding to the moving object is created. For example, the position acquisition unit 140 uses the image of the subject (a fixed object) different from the moving object in the same image to search for the position at which the image of the fixed object matches the part of the two-dimensional image cut out from the three-dimensional space image 1, and acquires coordinates, in the three-dimensional model, of the corresponding fixed object in the three-dimensional space image 1 in the case of matching.

The position acquisition unit 140 can acquire a position of the moving object in the three-dimensional space image 1 by obtaining a position and an imaging direction of a camera that captures the image, in the three-dimensional space from the coordinates of the fixed object in the three-dimensional model and the image of the fixed object in the image, and projecting the image of the moving object to a projection surface corresponding to an imaging distance of the moving object in the image.

The position acquisition unit 140 preferably creates a three-dimensional model of the moving object in the three-dimensional space image 1. In the case of creating the three-dimensional model of the moving object, it is preferable to use images having different imaging directions of the same moving object (images in which the moving object is facing a horizontal direction, or the like).

The three-dimensional space image update unit 150 is supplied with the three-dimensional space image 1, the image of the subject extracted by the subject extraction unit 120 (the image to which the score of the importance degree is assigned), and the position, in the three-dimensional space image, of each subject acquired by the position acquisition unit 140. The three-dimensional space image update unit 150 changes (updates) the image at the position corresponding to the subject in the three-dimensional space image 1 based on the image of the subject.

For example, the three-dimensional space image update unit 150 updates the three-dimensional space image 1 by specifying a polygon corresponding to the subject in the three-dimensional model of the three-dimensional space image 1 from the input image of the subject and the position of the subject in the three-dimensional space image from the position acquisition unit 140 and applying the image of the subject (performing texture mapping) by changing images on surfaces of the polygon. In a case where the subject is a moving object, the three-dimensional space image update unit 150 receives input of the position of the moving object in the three-dimensional space image 1 from the position acquisition unit 140 and updates the three-dimensional space image 1 by mapping the image of the moving object to the position.

In a case where the image of the subject corresponding to the surfaces of each polygon corresponding to the subject is not present, it is preferable to process the image of the subject (perform projective transformation on the image of the subject in accordance with directions of the surfaces of the polygon) or process original image quality of the images of the surfaces of the polygon to be close to image quality of the image of the subject, to prevent a sense of incongruity.

In a case where the subject is a moving object, and an image of the whole moving object is not present, the three-dimensional space image update unit 150 preferably complements an image of a lacking part of the moving object using a similar sample image or the like. For example, in a case where the subject is a person, and only an image of an upper body is present, an image of a lower body is complemented using a sample image or the like.

In a case where duplicate images of the subject such as the sky in the three-dimensional space are extracted, the three-dimensional space image update unit 150 preferably selects an appropriate image of the subject and uses the selected image for changing the three-dimensional space image 1. For example, among images in which a beautiful blue sky is captured during traveling in which the image group is captured, an image of the most beautiful blue sky can be used for changing an image of the sky in the three-dimensional space image 1.

The three-dimensional space image update unit 150 of the present example changes a degree of reflection of the image of the subject on the three-dimensional space image 1 in accordance with the importance degree of the image of the subject.

In the image illustrated in Fig. 4, as described above, since the importance degree of the "five-story pagoda" is high, an image of the "five-story pagoda" is reflected on the three-dimensional space image 1 "close to reality". In Fig. 4, the "people" surrounded by the frame are strangers, and an importance degree of the "strangers" is low. Thus, an image of the "strangers" is not reflected on the three-dimensional space image 1.

By doing so, the three-dimensional space image update unit 150 changes the three-dimensional space image 1 based on the image of the user. Accordingly, a user-specific three-dimensional space image 1A corresponding to the memory experienced by the user can be generated.

The generated three-dimensional space image 1A is stored in the memory 14 of the server 10 and/or the three-dimensional space image database 20 or the like.

The server 10 transmits the three-dimensional space image 1A to the user terminal 30 in accordance with a request from the user. The user can experience a virtual reality of the tourist spot or the like visited by the user by visually recognizing a two-dimensional static image or motion picture cut out from the three-dimensional space image 1A on a display of the user terminal 30 that has received the three-dimensional space image 1A, or another display (a head-mounted display). In particular, since the image of the user is reflected on the three-dimensional space image 1A, the memory experienced by the user and the virtual reality can be matched.

### <Second Embodiment of Image Processing Apparatus>

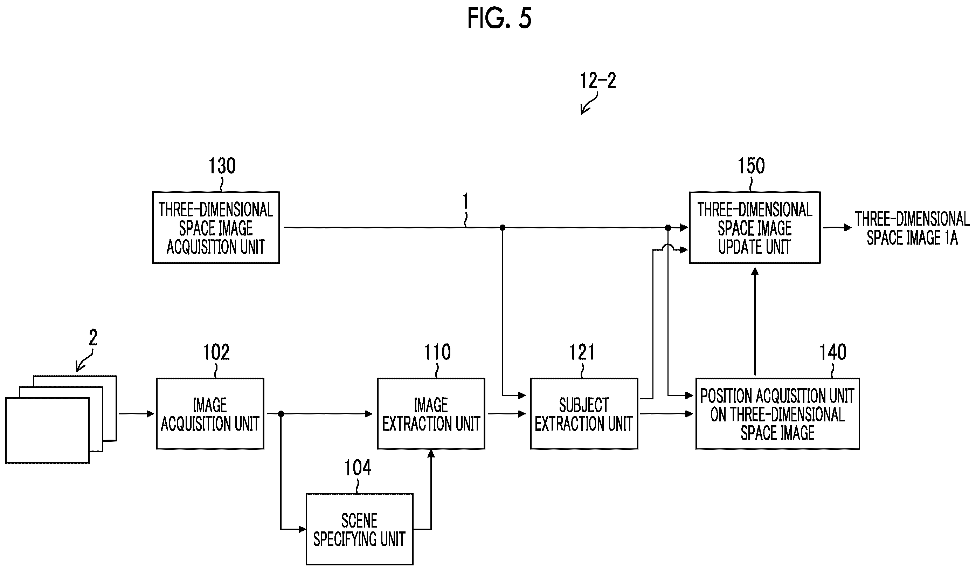

Fig. 5 is a functional block diagram illustrating a second embodiment of the image processing apparatus according to the embodiment of the present invention.

Fig. 5 is a functional block diagram mainly illustrating functions of the processor 12 of the server 10 functioning as the image processing apparatus illustrated in Fig. 2. Parts common to those of the processor 12-1 of the first embodiment illustrated in Fig. 3 will be designated by the same reference numerals and will not be described in detail.

A processor 12-2 of the second embodiment of the processor 12 illustrated in Fig. 5 is different from the processor 12-1 of the first embodiment in that a subject extraction unit 121 is included instead of the subject extraction unit 120 of the processor 12-1 of the first embodiment illustrated in Fig. 3.

The subject extraction unit 121 is supplied with the image of the user extracted by the image extraction unit 110 and the three-dimensional space image 1 acquired by the three-dimensional space image acquisition unit 130. The subject extraction unit 121 has the same function as the subject extraction unit 120 of the processor 12-1 of the first embodiment, and particularly appropriately extracts the image of the moving object as the image of the subject.

In a case where the subject is a moving object including a person, the three-dimensional space image related to the same moving object is not present in the three-dimensional space image 1.

The subject extraction unit 121 of the present example matches a position of the image of the fixed object in the input image of the user to the position of the image of the same fixed object in the two-dimensional image cut out from the three-dimensional space image 1. Next, only the image of the moving object can be acquired by obtaining a difference between the image of the user and the two-dimensional image that is cut out from the three-dimensional space image 1 and that is cut out such that the position of the image of the fixed object matches the position of the user on the image, and removing the image of the fixed object from the image of the user based on the difference.

Accordingly, in a case where a moving object including a person is captured in the image of the user, the image of the moving object can be favorably extracted.

### <Third Embodiment of Image Processing Apparatus>

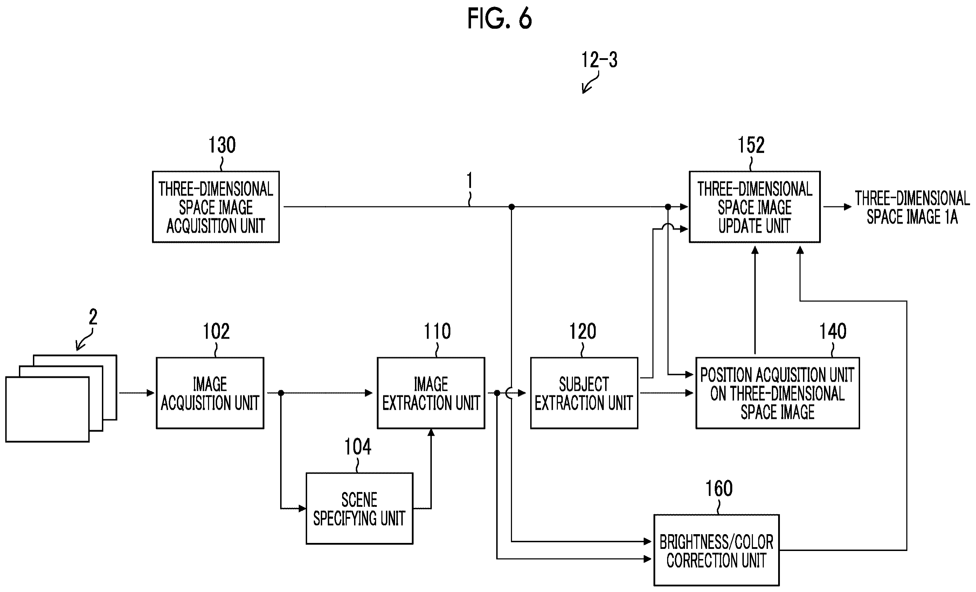

Fig. 6 is a functional block diagram illustrating a third embodiment of the image processing apparatus according to the embodiment of the present invention.

Fig. 6 is a functional block diagram mainly illustrating functions of the processor 12 of the server 10 functioning as the image processing apparatus illustrated in Fig. 2. Parts common to those of the processor 12-1 of the first embodiment illustrated in Fig. 3 will be designated by the same reference numerals and will not be described in detail.

A processor 12-3 of the third embodiment of the processor 12 illustrated in Fig. 6 is different from the processor 12-1 of the first embodiment in that a three-dimensional space image update unit 152 is included instead of the three-dimensional space image update unit 150 of the processor 12-1 of the first embodiment illustrated in Fig. 3, and a brightness/color correction unit 160 is added.

The brightness/color correction unit 160 is supplied with the image of the user extracted by the image extraction unit 110 and the three-dimensional space image 1 acquired by the three-dimensional space image acquisition unit 130. The brightness/color correction unit 160 is a part that detects brightness/color of the image of the user and brightness/color of the three-dimensional space image 1 and calculates correction information for matching the brightness/color of the three-dimensional space image 1 to the brightness/color of the image of the user.

For example, the brightness/color correction unit 160 calculates a representative value (for example, an average brightness value) of brightness signals of each pixel of the image of the user as information indicating the brightness of the image of the user. Similarly, the brightness/color correction unit 160 cuts out a two-dimensional image corresponding to the image of the user from the three-dimensional space image 1 and calculates a representative value (for example, an average brightness value) of brightness signals of each pixel of the cut two-dimensional image as information indicating the brightness of the three-dimensional space image 1. A difference between the average brightness values of both images is used as the correction information for correcting the brightness of the three-dimensional space image 1.

As information indicating the color of the image of the user, for example, the brightness/color correction unit 160 calculates a ratio (R:G:B) of integrated values, in the whole image, of each pixel of red (R), green (G), and blue (B) of the image of the user, or a ratio (R/G) of the integrated value of the R pixels to the integrated value of the G pixels and a ratio (R/G) of the integrated value of the R pixels to the integrated value of the G pixels. Similarly, as information indicating the color of the three-dimensional space image 1, for example, the brightness/color correction unit 160 cuts out the two-dimensional image corresponding to the image of the user from the three-dimensional space image 1 and calculates a ratio (R:G:B) of integrated values of each pixel of R, G, and B of the cut two-dimensional image, or a ratio (R/G) of the integrated value of the R pixels to the integrated value of the G pixels and a ratio (B/G) of the integrated value of the B pixels to the integrated value of the G pixels. Gain values for the R, G, and B pixels for matching the ratio (R:G:B) of the integrated values of the R, G, and B pixels or the ratios (R/G) and (B/R) of the integrated values of the R, G, and B pixels between both images are set as the correction information for correcting the brightness of the three-dimensional space image 1.

The three-dimensional space image update unit 152 changes the three-dimensional space image 1 based on the image of the subject extracted by the subject extraction unit 120 in the same manner as the three-dimensional space image update unit 152 of the first embodiment, and corrects the brightness and the color based on the correction information supplied from the brightness/color correction unit 160 for a part not changed by the image of the subject.

That is, the three-dimensional space image update unit 152 corrects the brightness of the three-dimensional space image 1 using the correction information, supplied from the brightness/color correction unit 160, indicating the difference between the average brightness values to match the brightness of the three-dimensional space image 1 to the brightness of the image of the user, and amplifies values of the R, G, and B pixels of the three-dimensional space image 1 using the gain values, supplied from the brightness/color correction unit 160, for the R, G, and B pixels for correcting the color to match the color of the three-dimensional space image 1 to the color of the image of the user.

Accordingly, even in a case where an imaging time point, weather, and a season of the image used in the three-dimensional space image 1 are different from an imaging time point, weather, and a season in which the image of the user is captured, and the brightness and the color of both images are different, the three-dimensional space image 1 can be matched to the brightness and the color of the image of the user. While the brightness and the color of the three-dimensional space image are corrected in the third embodiment, the present invention is not limited to this, and at least one of the brightness or the color of the three-dimensional space image may be corrected.

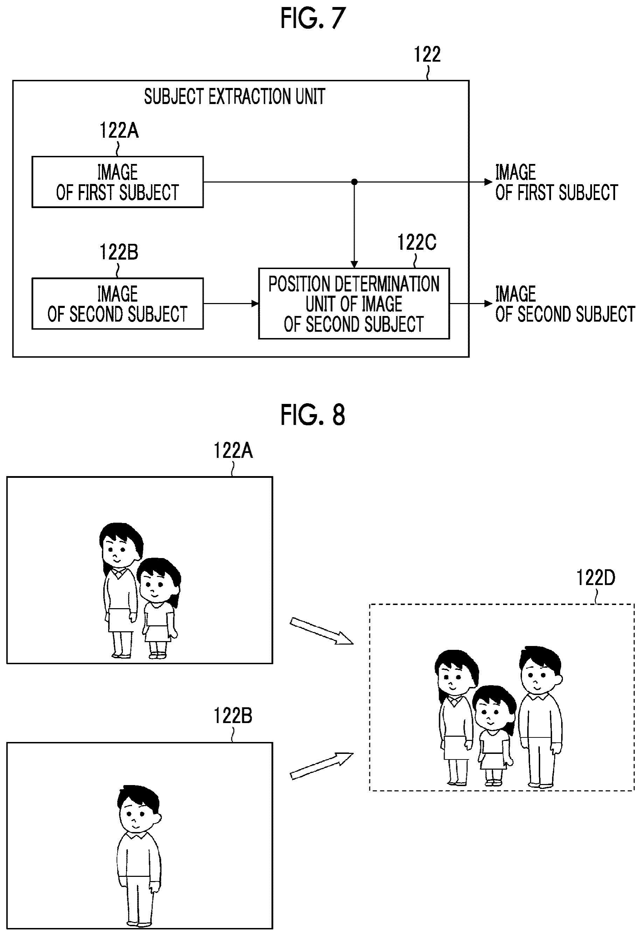

Fig. 7 is a diagram illustrating a second embodiment of the subject extraction unit illustrated in Fig. 3.

A subject extraction unit 122 illustrated in Fig. 7 extracts the image of the subject from the image of the user and determines the importance degree of the extracted image of the subject in the same manner as the subject extraction unit 120 illustrated in Fig. 3, and is different from the subject extraction unit 120 in that a position determination unit 122C of an image of a second subject is comprised.

It is assumed that the subject extraction unit 122, for example, extracts an image 122A of a subject (the first subject) included in one image of the image group of the user and extracts an image 122B of a subject (the second subject) included in another image different from the one image.

The first subject and the second subject are moving objects highly related to each other and are, for example, a "family". The first subject is a "mother" and a "child", and the second subject is a "father".

In a case where a family travels, it is difficult to take a photo of the whole family. In a case where the father is the image capturing person, the "mother" and the "child" are the subject (the first subject). In a case where the mother is the image capturing person, the "father" is the subject (the second subject).

Fig. 8 is a diagram illustrating one image including an image of the "mother" and the "child" and another image including an image of the "father".

In a case where one image and another image are captured at substantially the same place, it is considered that the image of the "mother" and the "child" and the image of the "father" overlap with each other on the three-dimensional space image 1, or the image of the "mother" and the "child" and the image of the "father" are unnaturally separated from each other.

In a case where the subject extraction unit 122 extracts the image 122A of the first subject and the image 122B of the second subject as described above, the position determination unit 122C of the image of the second subject illustrated in Fig. 7 determines (adjusts) a position of the image of one subject (in the present example, the image 122B of the second subject) on the other image in association with a position of the image 122A of the first subject on the one image.

Specifically, a group photo (an image of three people) 122D of the whole family is generated as illustrated on a right side of Fig. 8, or a position of the extracted image of the "father" is adjusted as if the image 122D of three people is present. It is preferable to also adjust a size of the image of the "father".

Accordingly, even in a case where an image in which the whole family is lined up is not captured, the three-dimensional space image 1A including the image of the whole family as if the whole family is lined up and captured can be generated.

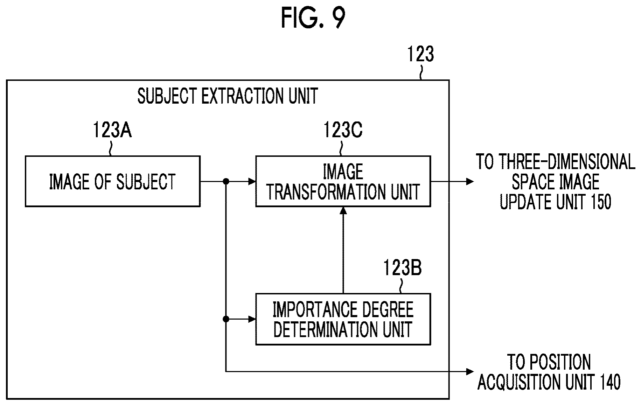

Fig. 9 is a diagram illustrating a third embodiment of the subject extraction unit illustrated in Fig. 3.

A subject extraction unit 123 illustrated in Fig. 9 extracts the image of the subject from the image of the user and determines the importance degree of the extracted image of the subject in the same manner as the subject extraction unit 120 illustrated in Fig. 3, and is different from the subject extraction unit 120 in that an importance degree determination unit 123B and an image transformation unit 123C are comprised.

In Fig. 9, an image 123A of the subject extracted by the subject extraction unit 123 is output to the importance degree determination unit 123B, the image transformation unit 123C, and the position acquisition unit 140 in a subsequent stage.

For example, the importance degree determination unit 123B determines which of high, medium, and low importance degrees the importance degree of the subject belongs to, based on the score indicating the importance degree assigned to the image 123A of the subject. Here, the determined importance degree of the subject is output to the image transformation unit 123C.

The image transformation unit 123C transforms the image of the subject to change the degree of reflection of the image of the subject on the three-dimensional space image 1 in accordance with the importance degree of the subject. For example, a change in the degree of reflection of the image of the subject depending on the importance degree of the subject is made as follows.
(1) Importance degree: high → reflect close to reality (close to reality)
(2) Importance degree: medium → simplify and reflect (close to deformation)
(3) Importance degree: low → do not reflect

For example, an image of a subject having the importance degree of "high", such as an image of a family, friends, or a main building, is reflected on the three-dimensional space image 1 close to reality. Meanwhile, an image of a subject having the importance degree of "medium", such as an image of a background, is reflected close to deformation. An image having the importance degree of "low", such as an image of a person (a stranger) not related to the image capturing person, is not used for updating the three-dimensional space image 1. Here, the reflection "close to reality" refers to reflection of the image of the subject on the three-dimensional space image 1 such that the subject can be more faithfully reproduced, and the reflection "close to deformation" refers to reflection of the image of the subject on the three-dimensional space image 1 such that the image of the subject is deformed like an illustration of an animation or a free material.

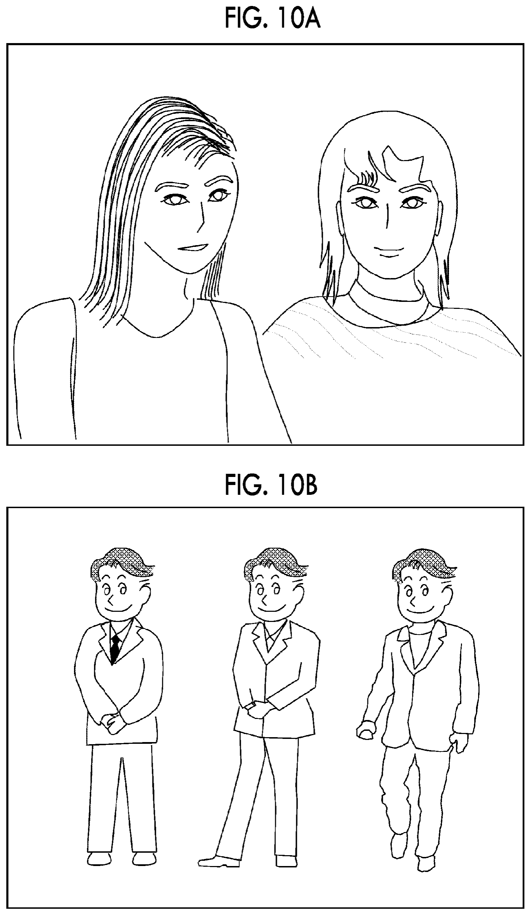

Figs. 10A and 10B are diagrams illustrating examples of an image of a person to be reflected on the three-dimensional space image in accordance with the importance degree of the subject.

Fig. 10A illustrates an image of a person having the importance degree of "high", such as a "family" or "friends". In this case, the image transformation unit 123C outputs the image of the person to the three-dimensional space image update unit 150 as it is. Accordingly, in the three-dimensional space image update unit 150, the image of the person illustrated in Fig. 10A is reflected on the three-dimensional space image 1 "close to reality". While the image of the person illustrated in Fig. 10A does not include an image of the lower body, an image "close to reality" is appropriately selected and reflected as the image of the lower body.

Fig. 10B is a diagram illustrating an example of an image of a person reflected "close to deformation".

In the case of reflecting an image of a person "close to reality", the three-dimensional space image update unit 150 may transform the image of the person such that a "face" is reflected "close to reality", and a "body" other than the face of the person is reflected "close to deformation".

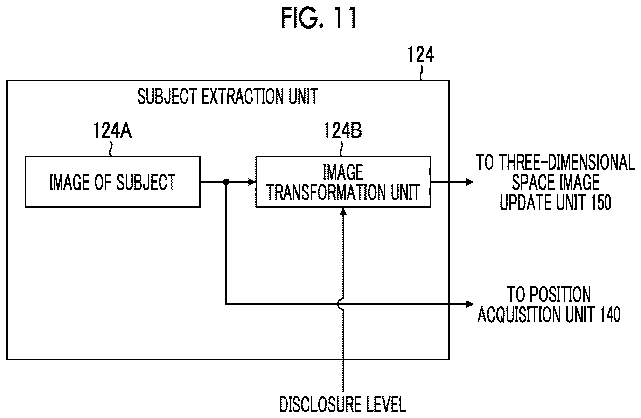

Fig. 11 is a diagram illustrating a fourth embodiment of the subject extraction unit illustrated in Fig. 3.

The subject extraction unit 124 illustrated in Fig. 11 extracts the image of the subject from the image of the user and determines the importance degree of the extracted image of the subject in the same manner as the subject extraction unit 120 illustrated in Fig. 3, and is different from the subject extraction unit 120 in that an image transformation unit 124B is comprised.

In Fig. 11, an image 124A of the subject extracted by the subject extraction unit 124 is output to the image transformation unit 124B and the position acquisition unit 140 in the subsequent stage.

As another input of the image transformation unit 124B, information indicating a disclosure level of the generated three-dimensional space image 1A is input in accordance with a selection instruction of the user provided on the user terminal 30. For example, a disclosure level such as non-disclosure for private use or disclosure to an unspecified number of people (for example, disclosure on a social networking service (SNS)) is prepared as the disclosure level, and the user can select a desired disclosure level.

The image transformation unit 124B transforms the image of the subject to change the degree of reflection of the image 124A of the subject on the three-dimensional space image 1 (change the degree of realness of the subject) in accordance with the input disclosure level. For example, a change in the degree of reflection of the image of the subject depending on the disclosure level is made as follows.
(1) Private use: close to reality
(2) Disclosure to an unspecified number of people: close to deformation

For example, even for an image of a subject having the importance degree of "high", such as an image of a family or friends, in a case where the disclosure level is the level of disclosure to an unspecified number of people, the image of the "family" or the "friends" is transformed close to deformation as illustrated in Fig. 10B so that individuals are not specified.

An image of a subject originally having the importance degree of "low", such as an image of a "stranger", is not reflected on the three-dimensional space image 1 regardless of the disclosure level or is transformed close to deformation. Accordingly, privacy of the "stranger" can be protected.

### <Fourth Embodiment of Image Processing Apparatus>

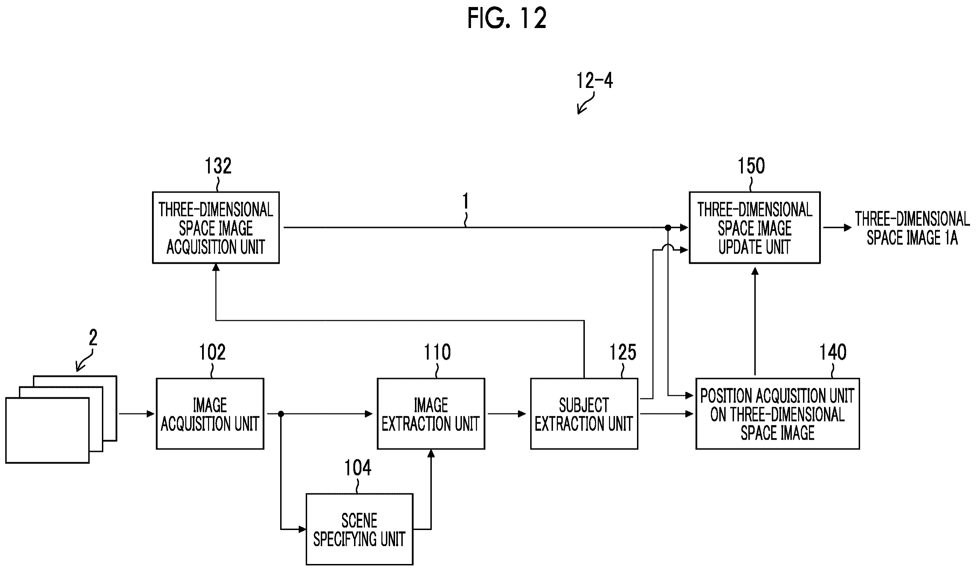

Fig. 12 is a functional block diagram illustrating a fourth embodiment of the image processing apparatus according to the embodiment of the present invention.

Fig. 12 is a functional block diagram mainly illustrating functions of the processor 12 of the server 10 functioning as the image processing apparatus illustrated in Fig. 2. Parts common to those of the processor 12-1 of the first embodiment illustrated in Fig. 3 will be designated by the same reference numerals and will not be described in detail.

A processor 12-4 of the third embodiment of the processor 12 illustrated in Fig. 12 is different from the processor 12-1 of the first embodiment in that a subject extraction unit 125 and a three-dimensional space image acquisition unit 132 are comprised instead of the subject extraction unit 120 and the three-dimensional space image acquisition unit 130 of the processor 12-1 of the first embodiment illustrated in Fig. 3.

The subject extraction unit 125 extracts the image of the subject from the image of the user and determines the importance degree of the extracted image of the subject in the same manner as the subject extraction unit 120 illustrated in Fig. 3, and outputs the score indicating the importance degree of the image of the subject to the three-dimensional space image acquisition unit 132.

The three-dimensional space image acquisition unit 132 acquires the three-dimensional space image 1 on which the image of the user is to be reflected, from a plurality of types of three-dimensional space images in accordance with the importance degree (the score indicating the importance degree) of the image of the subject input from the subject extraction unit 125, and outputs the acquired three-dimensional space image 1 to the three-dimensional space image update unit 150.

Here, the three-dimensional space image is not limited to the three-dimensional space image stored in the three-dimensional space image database 20, and various three-dimensional space images and the like disclosed to the public by other servers connected to the network 40 are present. A three-dimensional space image "close to reality", a three-dimensional space image "close to deformation", or a "simplified" three-dimensional space image is present as the types of the three-dimensional space images.

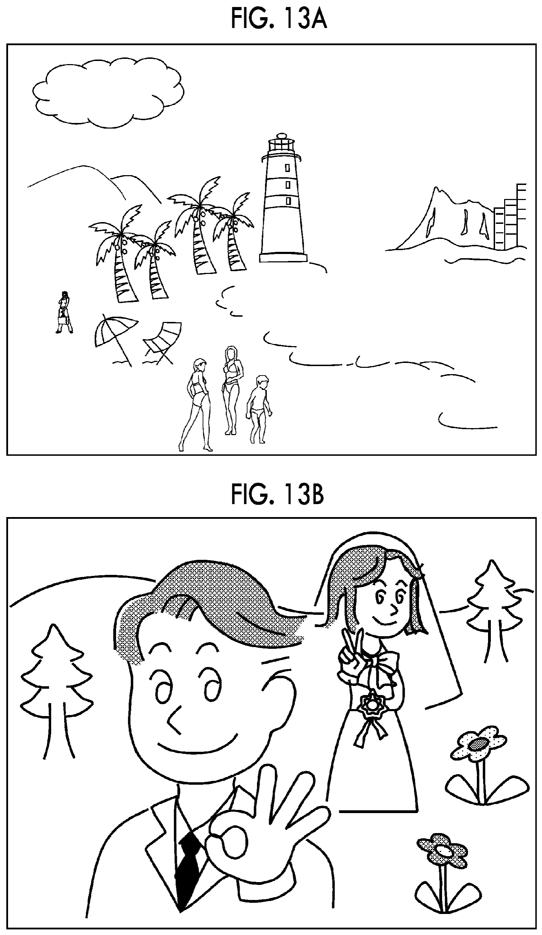

Figs. 13A and 13B are diagrams illustrating examples of the generated three-dimensional space image. Fig. 13A illustrates a three-dimensional space image "close to reality", and Fig. 13B illustrates a three-dimensional space image "close to deformation".

The three-dimensional space image "close to reality" illustrated in Fig. 13A is preferably a three-dimensional space image that is composed of the three-dimensional model consisting of a polygon having vertices corresponding to feature points of an object including a building, a road, or the like obtained from three-dimensional map data or the like, and an image obtained by imaging a real object or the like to be applied to the surfaces of each polygon of the three-dimensional model, and that can more faithfully reproduce a real space. The image of the subject for changing the three-dimensional space image is also preferably "close to reality".

Meanwhile, the three-dimensional space image "close to deformation" illustrated in Fig. 13B is preferably a three-dimensional space image such as a three-dimensional animation or a metaverse different from the real space. The image of the subject for changing the three-dimensional space image is also preferably "close to deformation". These three-dimensional space images also preferably have the same coordinates as the real space.

As the "simplified" three-dimensional space image, it is considered that the image to be applied to each surface of the polygon of the three-dimensional model is not an actual captured image and is simple computer graphics (CG) or the like created by a designer.

While the image of the subject to be reflected on the three-dimensional space image 1 is transformed "close to reality" or "close to deformation" in accordance with the importance degree of the subject in the present example, the three-dimensional space image 1 and the image of the subject can be matched by using a three-dimensional space image corresponding to the importance degree of the subject as the three-dimensional space image 1 used by the three-dimensional space image update unit 150.

Accordingly, the image of the subject "close to reality" can be used for changing the three-dimensional space image "close to reality", and the image of the subject transformed "close to deformation" can be used for changing the three-dimensional space image "close to deformation".

### <Fifth Embodiment of Image Processing Apparatus>

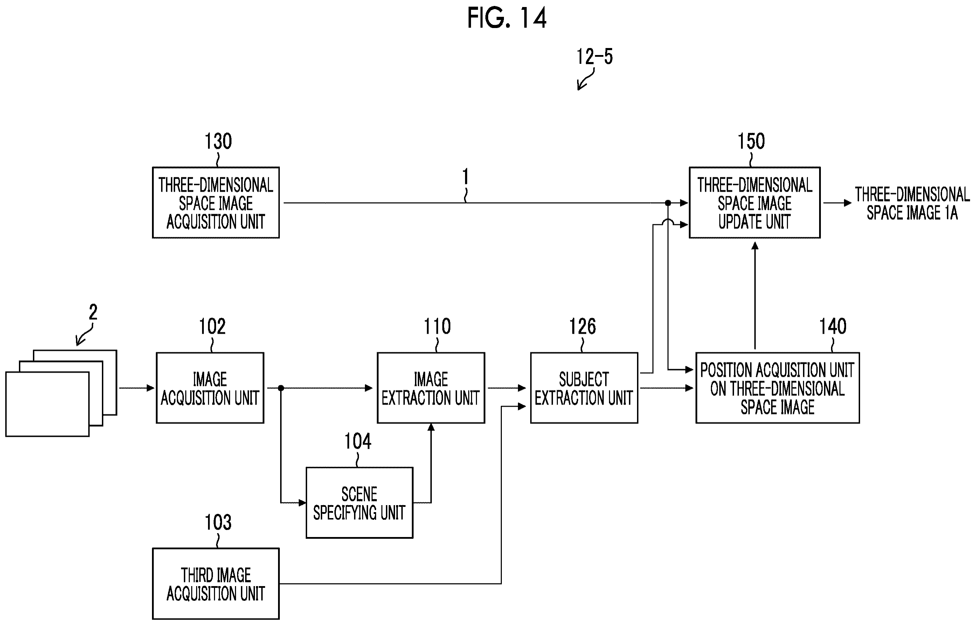

Fig. 14 is a functional block diagram illustrating a fifth embodiment of the image processing apparatus according to the embodiment of the present invention.

Fig. 14 is a functional block diagram mainly illustrating functions of the processor 12 of the server 10 functioning as the image processing apparatus illustrated in Fig. 2. Parts common to those of the processor 12-1 of the first embodiment illustrated in Fig. 3 will be designated by the same reference numerals and will not be described in detail.

A processor 12-5 of the fifth embodiment of the processor 12 illustrated in Fig. 14 is different from the processor 12-1 of the first embodiment in that a subject extraction unit 126 is comprised instead of the subject extraction unit 120 of the processor 12-1 of the first embodiment illustrated in Fig. 3, and a third image acquisition unit 103 is added.

For example, the third image acquisition unit 103 is a part that acquires an image of a stranger or an image of an idol or a character (a third image). The third image acquired by the third image acquisition unit 103 is output to the subject extraction unit 126 without passing through the image extraction unit 110.

The subject extraction unit 126 is supplied with the image of the important scene extracted from the image group 2 of the user and the third image acquired by the third image acquisition unit 103. The subject extraction unit 126 extracts the image of the subject from the image of the important scene and extracts the image of the subject included in the third image from the third image.

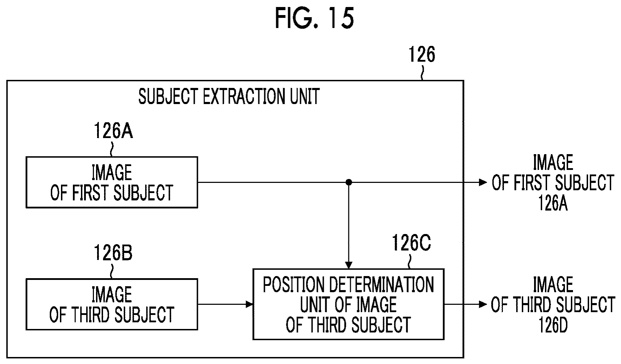

Fig. 15 is a diagram illustrating an embodiment of the subject extraction unit illustrated in Fig. 14.

The subject extraction unit 126 illustrated in Fig. 15 extracts the image of the subject (the first subject) from the image of the user and determines the importance degree of the extracted image of the first subject in the same manner as the subject extraction unit 120 illustrated in Fig. 3, and is different from the subject extraction unit 120 in that an image of a subject (a third subject) is extracted from the third image, and a position determination unit 126C of the image of the third subject is comprised.

The position determination unit 126C of the image of the third subject receives input of an image that is an image 126A of the first subject and that has a high importance degree (in particular, an image of a person), and an image 126B of the third subject. The position determination unit 126C of the image of the third subject determines (adjusts) a position of the image 126B of the third subject on the third image in association with a position of the image 126A of the first subject on the image of the user, in the same manner as the position determination unit 122C of the image of the second subject illustrated in Fig. 7.

Specifically, an image of two people in which the image 126B of the third subject is disposed adjacent to the image 126A of the first subject is generated, and the position of the image 126B of the third subject is adjusted as if the image of two people is present.

The subject extraction unit 126 outputs the image 126A of the first subject and an image 126D of the third subject of which the position is adjusted by the position determination unit 126C, to the position acquisition unit 140 and the three-dimensional space image update unit 150 in the subsequent stage.

Accordingly, even in a case where the image group 2 of the user does not include the image of two people including the third subject, the three-dimensional space image 1A including an image as if the image of two people including the third subject is captured can be generated.

### [Image Processing Method]

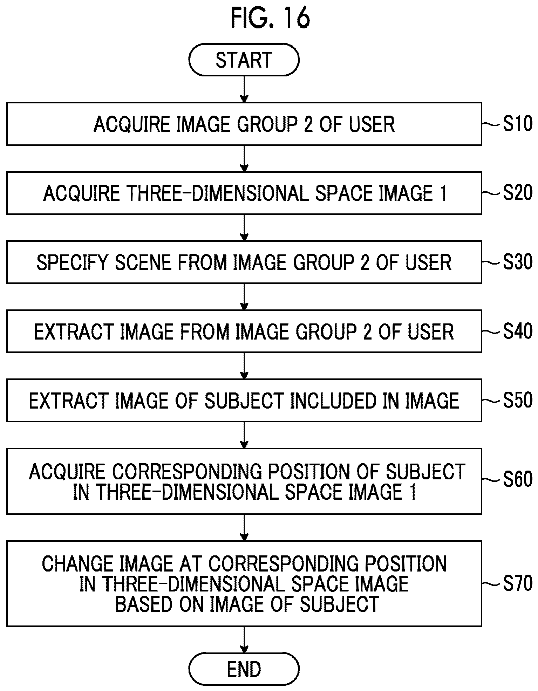

Fig. 16 is a flowchart illustrating an embodiment of the image processing method according to the embodiment of the present invention and illustrates a processing procedure of each unit performed by the processor 12-1 of the first embodiment of the server functioning as the image processing apparatus illustrated in Fig. 3.

In Fig. 16, the image acquisition unit 102 of the processor 12-1 acquires the image group 2 of the user (step S10). Meanwhile, the three-dimensional space image acquisition unit 130 acquires the three-dimensional space image 1 of the three-dimensional space (a tourist spot or the like at which the image group 2 of the user is captured) related to the image group 2 of the user from the three-dimensional space image database 20 illustrated in Fig. 2 (step S20).

Next, the scene specifying unit 104 specifies a scene from the image group 2 of the user acquired in step S10, obtains the importance degree (the first importance degree) for each specified scene, and assigns a score of the importance degree of the scene (step S30). The image extraction unit 110 extracts an image belonging to a scene having a high importance degree among the scenes specified by the scene specifying unit 104 from the image group 2 of the user (step S40).

Next, the subject extraction unit 120 extracts the image of the subject included in the image having the high importance degree extracted in step S40 (step S50). In this case, it is preferable to determine the importance degree (the second importance degree) of the subject and assign a score of the importance degree of the subject to the extracted image of the subject.

Next, the position acquisition unit 140 on the three-dimensional space image acquires the corresponding position (a position on the three-dimensional space) of the subject (the first subject) in the three-dimensional space image 1, extracted in step S50 (step S60).

The three-dimensional space image update unit 150 is supplied with the three-dimensional space image 1 acquired in step S20 and the image of the subject (the image to which the score of the importance degree is assigned) extracted in step S50, and the three-dimensional space image update unit 150 changes (updates) the image at the position (the position acquired in step S60) corresponding to the subject in the three-dimensional space image 1 based on the image of the subject (step S70).

Accordingly, a user-specific three-dimensional space image that matches the memory experienced by the user (the image of the user) can be generated.

### [Other]

While the server 10 functions as the image processing apparatus according to the embodiment of the present invention in the present embodiment, the present invention is not limited to this, and other apparatuses such as the user terminal 30 may function as the image processing apparatus according to the embodiment of the present invention.

In the present embodiment, for example, the following various processors may be used as a hardware structure of a processing unit that executes various types of processing, such as the processor 12 of the server 10. The various processors include a central processing unit (CPU) that is a general-purpose processor functioning as various processing units by executing software (a program), a programmable logic device (PLD) such as a field programmable gate array (FPGA) that is a processor having a circuit configuration changeable after manufacture, a dedicated electric circuit such as an application specific integrated circuit (ASIC) that is a processor having a circuit configuration dedicatedly designed to execute specific processing, and the like.

One processing unit may be composed of one of the various processors or may be composed of two or more processors of the same type or different types (for example, a plurality of FPGAs or a combination of a CPU and an FPGA). A plurality of processing units may be composed of one processor. A first example of the plurality of processing units composed of one processor is, as represented by a computer such as a client and a server, one processor composed of a combination of one or more CPUs and software, in which the processor functions as the plurality of processing units. A second example is, as represented by a system on chip (SoC) and the like, use of a processor that implements functions of the whole system including the plurality of processing units in one integrated circuit (IC) chip. Accordingly, various processing units are composed of one or more of the various processors as their hardware structures.

The hardware structure of the various processors is more specifically an electric circuit (circuitry) in which circuit elements such as semiconductor elements are combined.

The present invention also includes the image processing program that is installed on a computer to cause the computer to function as the image processing apparatus according to the embodiment of the present invention, and a non-volatile storage medium on which the image processing program is recorded.

The present invention is not limited to the above embodiments and can be subjected to various modifications without departing from the spirit of the present invention.

### Explanation of References

1, 1A: three-dimensional space image
2: image group of user
10: server
12, 12-1 to 12-5: processor
14: memory
20: three-dimensional space image database
30: user terminal
40: network
102: image acquisition unit
103: third image acquisition unit
104: scene specifying unit
110: image extraction unit
120 to 124, 125, 126: subject extraction unit
122C, 126C: position determination unit
123B: importance degree determination unit
123C, 124B: image transformation unit
130, 132: three-dimensional space image acquisition unit
140: position acquisition unit
150, 152: three-dimensional space image update unit
160: brightness/color correction unit
S10 to S70: step

## Claims

1. An image processing apparatus comprising:
a processor; and
a memory storing a program to be executed by the processor,
wherein the processor is configured to:
acquire a first image;
acquire a three-dimensional space image of a three-dimensional space related to the first image;
acquire a corresponding position, in the three-dimensional space image, of a first subject included in the first image; and
change an image at the position in the three-dimensional space image based on the first image.

2. The image processing apparatus according to claim 1,
wherein an image of the first subject is extracted from the first image, and
the image at the position in the three-dimensional space image is changed based on the image of the first subject.

3. The image processing apparatus according to claim 1,
wherein the first subject includes at least one of an object or a background included in the first image.

4. The image processing apparatus according to claim 1,
wherein the first image is an image group including a plurality of static images or a motion picture.

5. The image processing apparatus according to claim 4,
wherein the processor is configured to obtain a first importance degree for each scene.

6. The image processing apparatus according to claim 5,
wherein the processor is configured to specify a scene for which the first importance degree is greater than or equal to a threshold value.

7. The image processing apparatus according to claim 6,
wherein an image belonging to the specified scene is extracted from the image group, and
an image of the first subject is extracted from the image belonging to the specified scene.

8. The image processing apparatus according to claim 5,
wherein the first importance degree is determined based on at least one of an imaging frequency per unit time for each scene, the number of captured similar images for each scene, in a case where the first subject is a person, a facial expression, a motion, or voice of the person for each scene, an image capturing person of an image for each scene, or biological information of the person.

9. The image processing apparatus according to claim 2,
wherein the processor is configured to extract the image of the first subject from a difference between the three-dimensional space image and the first image.

10. The image processing apparatus according to claim 1,
wherein the processor is configured to perform correction of matching at least one of brightness or color of the three-dimensional space image to at least one of brightness or color of the first image.

11. The image processing apparatus according to claim 4,
wherein the processor is configured to:
extract the first subject included in one image of the image group and a second subject included in another image different from the one image;
determine a position of an image of the second subject in the three-dimensional space image in association with a position of an image of the first subject; and
change an image at the determined position in the three-dimensional space image based on the image of the second subject.

12. The image processing apparatus according to claim 2,
wherein the processor is configured to:
determine a second importance degree of the first subject; and
change a degree of reflection of the image of the first subject on the three-dimensional space image in accordance with the second importance degree.

13. The image processing apparatus according to claim 2,
wherein the processor is configured to:
determine a second importance degree of the first subject; and
extract an image of the first subject having the second importance degree greater than or equal to a threshold value.

14. The image processing apparatus according to claim 2,
wherein the processor is configured to:
receive input of a disclosure level of the three-dimensional space image; and
use the image of the first subject in which a degree of realness of the first subject is changed in accordance with the disclosure level.

15. The image processing apparatus according to claim 1,
wherein a plurality of types of the three-dimensional space images are present, and
the processor is configured to:
determine a second importance degree of the first subject; and
acquire the three-dimensional space image to be used for the changing from the plurality of types of three-dimensional space images in accordance with the second importance degree.

16. The image processing apparatus according to claim 1,
wherein a plurality of types of the three-dimensional space images are present, and the processor is configured to:
receive input of a disclosure level of the three-dimensional space image; and
acquire the three-dimensional space image to be used for the changing from the plurality of types of three-dimensional space images in accordance with the disclosure level.

17. The image processing apparatus according to claim 2,
wherein the processor is configured to:
acquire an image of a third subject;
determine a position of the image of the third subject in the three-dimensional space image in association with a position of the image of the first subject; and
change an image at the determined position in the three-dimensional space image based on the image of the third subject.

18. An image processing method comprising:
via a processor,
a step of acquiring a first image;
a step of acquiring a three-dimensional space image of a three-dimensional space related to the first image;
a step of acquiring a corresponding position, in the three-dimensional space image, of a first subject included in the first image; and
a step of changing an image at the position in the three-dimensional space image based on the first image.

19. An image processing program causing a computer to implement:
a function of acquiring a first image;
a function of acquiring a three-dimensional space image of a three-dimensional space related to the first image;
a function of acquiring a corresponding position, in the three-dimensional space image, of a first subject included in the first image; and
a function of changing an image at the position in the three-dimensional space image based on the first image.

20. A non-transitory computer-readable recording medium on which the program according to claim 19 is recorded.
